# EUROPEAN PATENT SPECIFICATION

(11) **EP 3 091 433 B1**
(45) Date of publication and mention of the grant of the patent: **24.08.2022**
(21) Application number: 15196163.8
(22) Date of filing: 25.11.2015
(51) Int. Cl.: G06F 9/38

(54) **SYSTEM AND METHOD TO REDUCE LOAD-STORE COLLISION PENALTY IN SPECULATIVE OUT OF ORDER ENGINE**
SYSTEM UND VERFAHREN ZUR REDUZIERUNG VON LASTSPEICHERUNGSKOLLISIONSSTRAFEN IN SPEKULATIVER OUT-OF-ORDER-MASCHINE
SYSTÈME ET PROCÉDÉ POUR RÉDUIRE LES PÉNALITÉS DE COLLISION LORS DE CHARGEMENT-STOCKAGE DANS UN MOTEUR SPÉCULATIF HORS SERVICE

(30) Priority: 07.05.2015 CN 201510229378
(43) Date of publication of application: 09.11.2016
(73) Proprietor: VIA Alliance Semiconductor Co., Ltd., Shanghai 201203 (CN)
(72) Inventor: DI, Qianli, Beijing 100084 (CN); WANG, Jianbin, Beijing 100084 (CN); GAO, Xin-Yu, Beijing 100084 (CN)
(74) Representative: Michalski Hüttermann & Partner Patentanwälte mbB

(56) References cited:
- US-A1- 2010 049 952
- US-A1- 2011 040 955

## Description

### BACKGROUND OF THE INVENTION

### FIELD OF THE INVENTION

The present invention relates in general to processing engines, and more specifically to a system and method of reducing the load-store collision penalty in a speculative out of order processing engine.

### DESCRIPTION OF THE RELATED ART

A processing engine, such as a microprocessor or the like, executes the instructions of an instruction set architecture, such as the x86 instruction set architecture or the like. In many such engines, the instructions of the instruction set architecture, often referred to as macroinstructions, are first translated into microinstructions (or micro-operations or "µops") that are issued to a reservation stations module that dispatches the instructions to the execution units. The microinstructions are more generally referred to herein simply as "instructions." The instructions are also issued to a reorder buffer which ensures in-order retirement of the instructions.

An out-of-order (O-O-O) scheduler is widely used in processor design and provides an important distinction between high performance processor and others. In an O-O-O scheduler, each instruction is dispatched based on dependency, which is when the instructions use the same register as source and destination. Yet, the dependency of some instructions, such as load and store instructions, is difficult to recognize. This is because the dependency is not caused by the same register, but instead by the same address which is not known by the scheduler at the schedule stage. So, one common method is to speculatively assume that the load and store instructions do not have any collisions. When a collision is unfortunately detected afterwards, the result is incorrect, the pipeline is flushed, and the instructions are dispatched again. When the speculative dispatch of an instruction is incorrect, the flushing and re-dispatch of the instruction introduces a significant penalty.

US 2010/049952 A1 describes an apparatus for decreasing the likelihood of incorrectly forwarding store data includes a hash generator, which hashes J address bits to K hashed bits

US 2011/040955 A1 describes a microprocessor which includes a queue comprising a plurality of entries each configured to hold store information for a store instruction.

### SUMMARY OF THE INVENTION

The invention is defined by the features of the independent claims. Preferred embodiments are defined by the features of the dependent claims.

A microprocessor according to one embodiment includes a load pipeline, a scheduler, and a load-store queue. The load pipeline includes multiple stages which include at least one operand stage and two or more execution stages. The scheduler dispatches load instructions to the at least one operand stage for execution by the execution stages. The load instructions include a speculatively dispatched load instruction. The load-store queue asserts a clear signal to invalidate the speculatively dispatched load instruction when a match occurs between the load instruction virtual address and a store instruction virtual address of at least one previously dispatched store instruction in which corresponding store data has not yet been determined.

The clear signal invalidates the speculatively dispatched load instruction in the event of a collision, such as when a match occurs between the load instruction virtual address and a store instruction virtual address of at least one previously dispatched store instruction. In this manner, the scheduler, which is otherwise configured to schedule dispatch of instructions that are dependent upon the speculatively dispatched load instruction, may instead not prematurely dispatch the dependent instructions when the clear signal is asserted.

In one embodiment, the load pipeline is configured to assert a load valid signal when the speculatively dispatched load instruction has progressed to a selected execution stage. Kill logic is provided that prevents the load valid signal from being detected by the scheduler when the clear signal is asserted. Broadcast logic may be provided to receive and broadcast the load valid signal to the scheduler when asserted, except when the clear signal is asserted to invalidate the speculatively dispatched load instruction. The broadcast logic may include kill logic that prevents the broadcast logic from broadcasting the load valid signal when the clear signal is asserted.

The load-store queue may include multiple entries, each for comparing the load instruction virtual address of the speculatively dispatched load instruction with one or more store instruction virtual addresses. Valid logic and qualify logic may be provided for each entry to ensure a corresponding store instruction virtual address corresponds to a store instruction that is dispatched early than the speculatively dispatched load instruction and whose corresponding store data has not yet been determined. Each entry may assert a preliminary clear signal, and OR logic may be provided to assert the clear signal when any one or more of the preliminary clear signals are asserted.

A load-store collision detection system is disclosed for a speculative out of order processing engine. The processing engine includes a scheduler that dispatches instructions to multiple instruction pipelines, in which the instruction pipelines include a load pipeline that provides a load valid signal when a speculatively dispatched load instruction is executing. The load-store collision detection system includes comparator logic, broadcast logic, and kill logic. The comparator logic asserts a clear signal when a load instruction virtual address of the speculatively dispatched load instruction matches at least one store instruction virtual address of at least one previously dispatched store instruction whose corresponding store data is not ready yet. The broadcast logic broadcasts the load valid signal to the scheduler to enable dispatch of any instructions dependent upon the speculatively dispatched load instruction. The kill logic invalidates the load valid signal when the clear signal is asserted before or coincident with the load valid signal.

The kill logic may be incorporated within the broadcast logic or the scheduler or any suitable combination of both. The load-store collision detection system may include a memory for storing one or more store instruction virtual addresses.

A method of reducing load-store collisions in a speculative out of order processing engine includes providing a store instruction address for each of at least one previously dispatched store instruction whose corresponding data is not ready yet, speculatively dispatching a load instruction to a load pipeline, determining a load instruction address for the speculatively dispatched load instruction before said speculatively load instruction is executed, comparing the load instruction address with the store instruction address of each of the at least one previously dispatched store instruction, asserting a clear signal when the load instruction address matches the store instruction address of the at least one previously dispatched store instruction, asserting a load valid signal for the speculatively dispatched load instruction while being executed, and invalidating the load valid signal when the clear signal is also asserted.

The method may include broadcasting the load valid signal to each queue of a scheduler, and suppressing the broadcasting of the load valid signal when the clear signal is also asserted. The method may include determining the validity of the store instruction address of each of the at least one previously dispatched store instruction. The method may include validating and qualifying the store instruction address of each of the at least one previously dispatched store instruction. The method may include comparing the load instruction address with multiple store instruction address and asserting a corresponding one of multiple preliminary clear signals for each match, and asserting the clear signal when at least one of the preliminary clear signals is asserted. The method may include asserting a corresponding one of the preliminary clear signals only when a corresponding store instruction address is valid and qualified.

### BRIEF DESCRIPTION OF THE DRAWINGS

The benefits, features, and advantages of the present invention will become better understood with regard to the following description, and accompanying drawings where:
FIG. 1 is a simplified block diagram of a superscalar, pipelined microprocessor implemented according to one embodiment of the present invention;
FIG. 2 is a diagram depicting, in simplified manner, an O-O-O instruction sequence in contrast to an in-order instruction sequence according to a conventional configuration illustrating a collision and corresponding consequences;
FIG. 3 is a simplified block diagram of the load pipeline of FIG. 1 receiving instructions dispatched from the LD RS Q within the reservation stations of FIG. 1 and corresponding load execution stages according to one embodiment;
FIG. 4 is a more detailed block diagram of the LoStQ of FIG. 3 according to one embodiment of the present invention; and
FIG. 5 is a diagram of an exemplary entry of the LoStQ of FIG. 4 according to an alternative embodiment with memory devices.

### DETAILED DESCRIPTION

The inventors have recognized the penalty associated with a load-store collision caused by speculative dispatch of a load instruction within a processing engine. They have therefore developed a system and method of detecting load-store collisions before the load is dispatched for execution. The system and method further squashes, or otherwise suppresses, the dispatch valid of the load instruction to prevent the issuance of additional instructions which depend upon the speculatively dispatched load instruction. Since the potentially dependent instructions are not dispatched prematurely, the pipeline need not be flushed and the dependent instructions need not be replayed. In this manner, the penalty associated with the speculatively dispatched load instruction is reduced or otherwise minimized. A load-store (Lo-St) queue (LoStQ) structure is incorporated into the instruction pipeline which detects a collision between the load and any store instruction that is not ready to complete. A store instruction that is not ready to complete means that the address portion (STA) has been determined, but the data portion (STD) has not yet been determined, so that the store instruction is considered temporarily "LoSt." The LoStQ detects this collision and issues a clear signal back to kill broadcast of the dispatch valid of the load instruction to scheduler queues holding instructions for dispatch. The clear signal suppresses the dispatch of additional instructions that depend upon the speculatively dispatched load to improve performance efficiency.

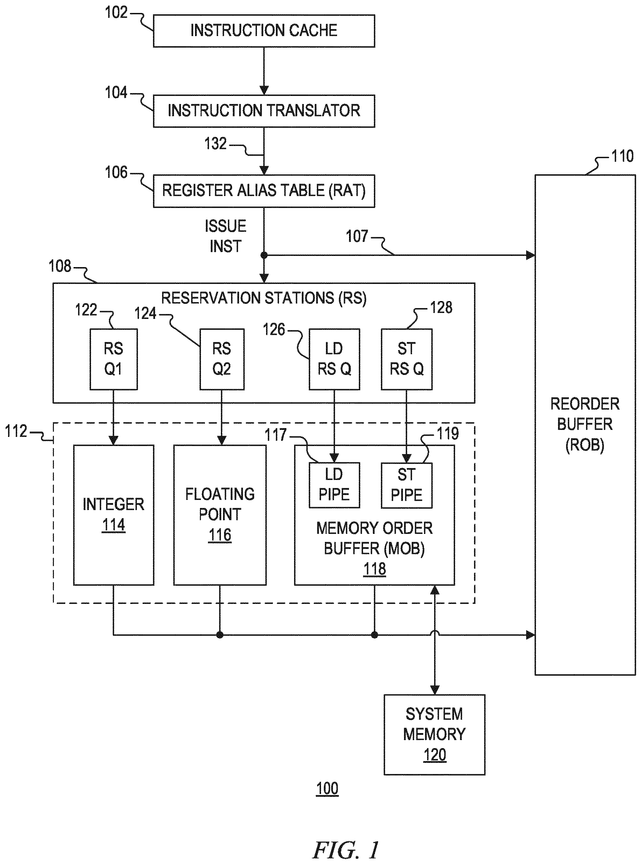

FIG. 1 is a simplified block diagram of a superscalar, pipelined microprocessor 100 implemented according to one embodiment of the present invention. The microprocessor 100 includes an instruction cache 102 that caches macroinstructions of an instruction set architecture, such as the x86 instruction set architecture or the like. Additional or alternative instruction set architectures are contemplated. The microprocessor 100 includes an instruction translator 104 that receives and translates the macroinstructions into microinstructions. The microinstructions are then provided to a register alias table (RAT) 106, which generates microinstruction dependencies and issues the microinstructions in program order to reservation stations 108 and to a reorder buffer (ROB) 110 via instruction path 107. The microinstructions issued from the RAT 106 (ISSUE INST) may typically be referred to as microinstructions, but are more generally referred to herein simply as "instructions." The ROB 110 stores an entry for every instruction issued from the RAT 106. The reservation stations 108 dispatches the instructions to an appropriate one of multiple execution units 112.

The execution units 112 may include one or more integer execution units, such as an integer arithmetic/logic unit (ALU) 114 or the like, one or more floating point execution units 116, such as including a single-instruction-multiple-data (SIMD) execution unit such as MMX and SSE units or the like, a memory order buffer (MOB) 118, etc. The MOB 118 generally handles memory type instructions to a system memory 120, such as including a load instruction execution pipe 117 and a similar store instruction execution pipe 119. The system memory 120 may be interfaced with the MOB 118 via a data cache (e.g., L2 data cache, not shown) and a bus interface unit (BIU, not shown). The execution units 112 provide their results to the ROB 110, which ensures in-order retirement of instructions.

In one embodiment, the reservation stations 108 includes multiple RS queues, in which each RS queue schedules and dispatches corresponding issued instructions to corresponding execution units 112 when the instructions are ready to be executed. In general, a separate RS queue is provided for each execution unit 112. For example, an RS Q1 122 is provided for the integer execution unit 114 and an RS Q2 124 is provided for the floating point execution unit 116. In one embodiment, a LD RS Q 126 provides load instructions to the load pipeline 117, and a separate ST RS Q 128 provides store instructions to the store pipeline 119. Each RS Q of the reservation stations 108 may alternatively be referred to as a scheduler that includes schedule logic or the like (not shown) that schedules dispatch of issued instructions to the corresponding execution unit 112.

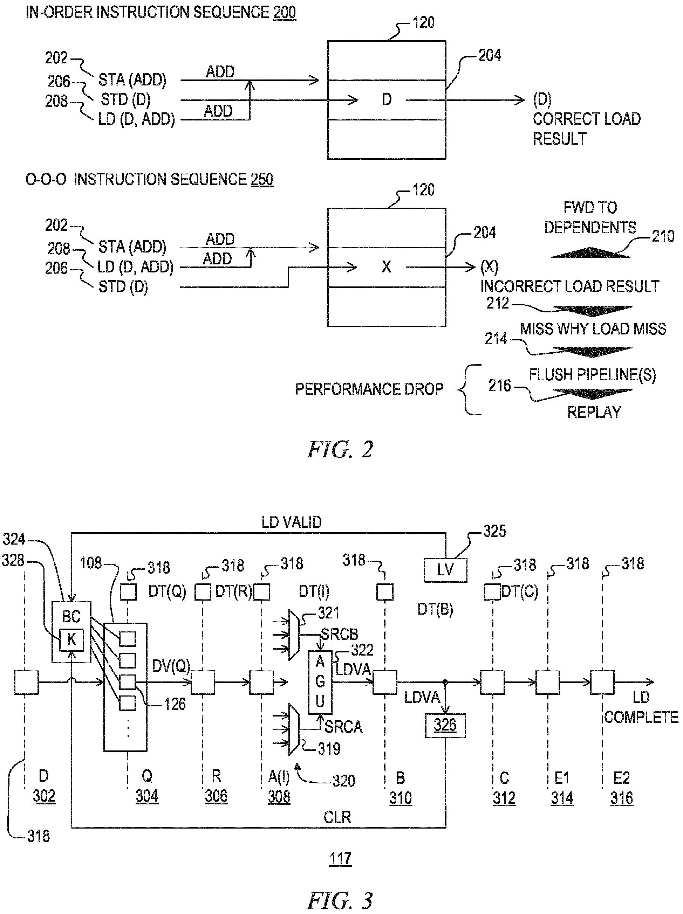

FIG. 2 is a diagram depicting, in simplified manner, an O-O-O instruction sequence 250 in contrast to an in-order instruction sequence 200 according to a conventional configuration illustrating a collision and corresponding consequences. The in-order instruction sequence 200 begins with a store instruction, which is divided into a store address (STA) micro-operation (µοp) 202 followed by a store data (STD) µοp 206 for storing data D at a memory location 204 in the system memory 120 with address ADD. The store µops are followed by a load (LD) instruction or LD µop 208 for loading the data D from the memory location 204 at address ADD into a storage location, such as a register or the like. Since the instructions are performed in the proper order, the correct data D is stored at the memory location 204 by the time the LD µοp 208 is executed, so that the load result is correctly achieved by loading the correct data D.

The O-O-O instruction sequence 250 also begins with the STA micro-operation (µοp) 202. In this case, however, the LD µοp 208 is dispatched out of order (out of program order) and before the STD µοp 206 since the data D operand is not yet known. The LD µοp 208 loads the data X currently stored at the memory location 204 at address ADD into a selected storage location, in which data X is, for practical purposes, not the same as data D. Since the data D was not yet available, the LD µοp 208 loads the incorrect data X. As shown by arrow 210, the speculative execution of the LD µοp 208 is reported back to other dependent µops depending on the LD µop 208 at the reservation stations 108, and these dependent µops may be dispatched into the pipeline of a corresponding execution unit to retrieve operands prior to execution. Eventually as shown by arrow 212, the results of the load µοp 208 are reported back to the ROB 110, which includes a "MISS WHY" routine or the like that detects the incorrect load result. In response, the ROB 110 flushes the load pipeline 117 to remove the LD µοp 208, and also flushes any other execution pipeline processing any instructions dependent upon the LD µοp 208 that have been dispatched. Also, as indicated by arrow 216, the LD µοp 208 and the corresponding dependent instructions must ultimately be replayed after the STD µοp 206 is executed to retrieve the correct data D. The flushing of the execution pipelines and the replay of the load instruction and any dependent instructions has a negative impact on performance of the microprocessor 100.

FIG. 3 is a simplified block diagram of the load pipeline 117 receiving instructions dispatched from the LD RS Q 126 within the reservation stations 108 and corresponding load execution stages according to one embodiment. The reservation stations 108 is shown including multiple RS Q's or schedulers as previously described. The load pipeline 117 is divided into multiple sequential stages, shown as a D stage 302, a Q stage 304, an R stage 306, an A(I) stage 308, a B stage 310, a C stage 312, an E1 stage 314 and an E2 stage 316. The stages are separated by corresponding sets of synchronous latches 318 or the like for transferring or propagating data and information through the load pipeline 117 synchronous with a common clock signal (not shown). Vertical dashed lines and corresponding boxes are drawn between sequential stages to depict stage boundaries.

Stage D 302 is an issue stage which is common to each the pipelines of each of the execution units 112, in which instructions are issued from the RAT 106 to the scheduler RS Q's within the reservation stations 108. Stages Q, R and A(I) 304, 306 and 308 are the operand stages in which a selected load instruction is dispatched for execution and the operands for the selected instruction are determined prior to actual execution. The remaining stages B, C, E1 and E2 are the load execution stages for executing the dispatched load instruction. When a valid load instruction is dispatched from the LD RS Q 126 at stage Q, a dispatch valid signal DV(Q) is asserted. Each stage generates corresponding dispatch tags DT(Q), DT(R), DT(I), DT(B), DT(C) as the load instruction propagates through the load pipeline 117.

In stage A(I) 308, select logic 320 selects from among possible sources (e.g., the sources may be a register, one of several types of constants, a memory address, etc.) of the operands for the load instructions for determining both a first source SRCA and a second source SRCB, which are provided to respective inputs of an address generation unit (AGU) 322. As an example of the select logic 320, a first multiplexer (MUX) 319 selects from among the possible sources to provide the first source SRCA, and a second MUX 321 selects from among the possible sources to provide the second source SRCB, both provided to inputs of the AGU 322. The AGU 322 outputs a corresponding load instruction virtual address (LDVA) for accessing the system memory 120. It is understood that LDVA may be converted to a physical address for accessing the system memory 120. It should be noted that LDVA may be just part of the virtual address of the load instruction. For example, a 12-bit AGU 322 calculates [11:0] LDVA, which is identical with [11:0] of the physical address. However, if the [11:0] LDVA is the same with a store instruction virtual address (STVA) of previously dispatched store instruction whose store data has not yet been determined, the physical addresses of the LD instruction and ST instruction are probably the same, that means a load-store collision is detected. In other embodiments, more bits of the virtual address will be calculated and compared to improve the accuracy.

The LDVA is shown provided through the synchronous latches 318 to stage B 310 to initiate execution. In stage B 310, the latched version of LDVA is provided to an input of a load-store queue (LoStQ) 326, which develops a clear signal CLR to invalidate the speculatively dispatched load instruction when a match occurs between the LDVA and a store instruction virtual address (STVA) of at least one previously dispatched store instruction whose store data has not yet been determined. The detail of the LoStQ 326 will be further described herein. In stage B 310, load valid (LV) logic 325 asserts a load valid signal LD VALID is provided back to an input of broadcast (BC) logic 324 in stage D 302. The BC logic 324 is operative to forward or broadcast the LD VALID signal to one or more up to all of the scheduler RS Q's within the reservation stations 108. In this manner, any instruction that has been issued to the reservation stations 108 and that is dependent upon the LD instruction may be scheduled for dispatch into corresponding execution units. Generally, these dependent instructions are not dispatched until the LD VALID signal is provided to ensure proper execution. It is worth noting that the AGU 322 provides the LDVA of the load instruction as early as one of the operand stages (e.g., Stages A(I) 304), that is, before the load instruction has progressed to the execution stages (e.g., stages B) to produce the LD VALID signal.

The CLR signal from the LoStQ 326 is provided back to an input of KILL logic 328 shown within the BC logic 324. In general, the kill logic 328 is operative to prevent the LD VALID signal from being broadcasted by the BC logic 324 to the scheduler RS Q's of the reservation stations 108. In one embodiment, the KILL logic 328 is separately added to prevent broadcast of the LD VALID signal. In another embodiment, the BC logic 324 includes disable logic or the like incorporated within the BC logic 324, in which the BC logic 324 passes the LD VALID signal to the reservation stations 108 only if the CLR signal is not asserted to disable broadcast.

In one alternative embodiment, the KILL logic 328 may be provided external to the BC logic 324, in which the KILL logic 328 either passes or blocks the broadcast of the LD VALID signal based on the state of CLR. In another alternative embodiment, the KILL logic 328 is distributed among the scheduler RS Q's of the reservation stations 108. In this case, the CLR signal may instead be provided to each of the scheduler RS Q's within the reservation stations 108, in which case assertion of the CLR signal prevents the broadcasted LD VALID signal from changing operative signals, bits or values within each RS Q.

In general, when CLR is asserted before LD VALID or at least coincidentally asserted with LD VALID, then the CLR signal suppresses detection of assertion of the LD VALID signal. When the LD VALID signal is suppressed, then any instructions that are dependent upon the speculatively issued load instruction are not yet dispatched for execution. The dependent instructions may be executed at a later time after the load instruction is replayed.

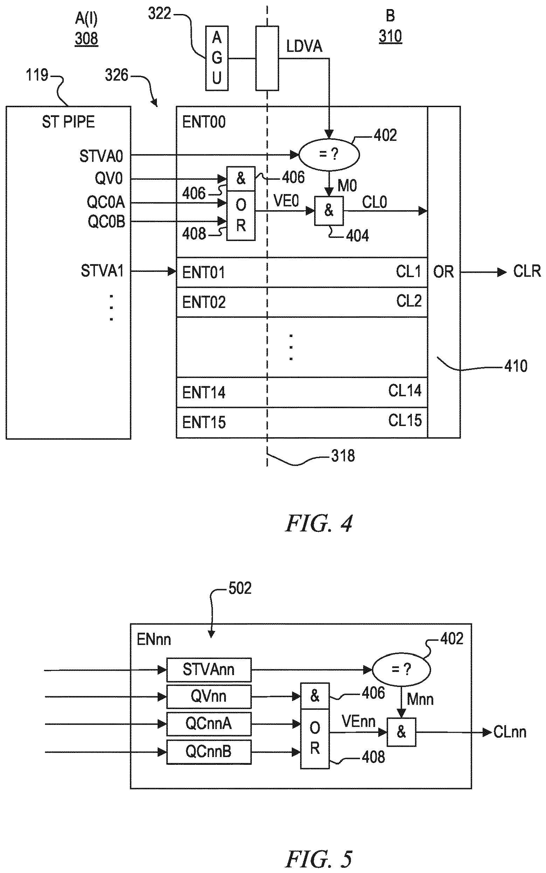

FIG. 4 is a more detailed block diagram of the LoStQ 326 according to one embodiment of the present invention. The AGU 322 develops and passes each load virtual address LDVA to stage B 310 (via a corresponding set of latches 318) as previously described. The LoStQ 326 comprises comparator logic. The LoStQ 326 includes multiple entries individually labeled ENTnn, in which "nn" denotes an entry number. In the illustrated embodiment, the LoStQ 326 includes 16 entries ENT00, ENT01, ..., ENT15 (or ENT00 - ENT15). The details of the first entry ENT00 are shown, in which it is understood the remaining entries ENT01 - ENT15 are each substantially identical to the first for comparing up to 16 virtual addresses at a time.

The LoStQ 326 receives virtual addresses of one or more previously dispatched store instructions in which the corresponding data values to be stored have not yet been determined or provided. As understood by those skilled in the art, a store instruction is divided into a STA µοp for determining the address of the system memory 120 and a corresponding STD µοp for determining the corresponding data value. The STA and STD µοp are processed within the store pipeline 119 of the MOB 118. In one embodiment, the LoStQ 326 only receives the virtual addresses determined by one or more previously dispatched STA µops in which the corresponding STD µop is yet to be processed by the store pipeline 119. In another embodiment, the LoStQ 326 receives all the virtual addresses from the store pipeline 119. For example, the LD RS Q 126 also includes 16 entries, which holds 16 store instructions that are then dispatched to the store pipeline 119. In such a case, the entries of the LoStQ 326 respectively correspond to the entries of the LD RS Q 126 and receive all the store instruction virtual addresses (STVA0 - STVA15) from the store pipeline 119. As described further herein, the LoStQ 326 identifies a collision between the LDVA of a speculatively dispatched load instruction and any of the virtual addresses of store instructions. When a collision is detected, the LoStQ 326 asserts the CLR signal to suppress detection of the LD VALID signal by the reservation stations 108 to prevent premature dispatch of any instructions dependent upon the speculatively dispatched load instruction.

The first entry ENT00 includes a comparator 402 that compares the virtual address LDVA of the speculatively dispatched LD instruction with a store instruction virtual address STVA0 of the STA µοp received by the first entry ENT00. If the virtual addresses are the same, then the comparator 402 asserts a match signal M0 to one input of AND logic 404 (in which "&" denotes a logical AND function). The first entry ENT00 also includes AND logic 406 that receives a qualify valid signal QV0 from the store pipeline 119 that indicates whether the virtual address STVA0 is valid. The first entry ENT00 also includes OR logic 408 that receives qualify condition signals QC0A and QC0B from the store pipeline 119, in which either qualify condition signal asserted true indicates validity of STVA0. The qualify condition signals QC0A and QC0B are logically OR'd together and then logically AND'd with QV0 to determine a store valid signal VE0 indicating the validity of STVA0. The validity means STVA0 corresponds to a store instruction that is dispatched early than the speculatively dispatched load instruction and the corresponding store data of the store instruction has not yet been determined. VE0 is provided to the other input of the AND logic 404, which outputs a first clear signal CL0 for the first entry ENT00. Each of the entries ENT00 - ENT15 output a corresponding one of 16 clear signals CL1 - CL15, which are provided to respective inputs of OR logic 410, which outputs the CLR signal.

In operation of the LoStQ 326, if the virtual address LDVA matches any valid one of up to 16 store virtual addresses STVA0 - STVA15 provided to the entries ENT00 - ENT15, respectively, then a collision is detected and CLR is asserted in the B stage 310. If CLR is asserted, then when the speculatively dispatched load instruction reaches the B stage 310 and then the LD VALID signal is asserted, then the KILL logic 324 suppresses or blocks assertion of the LD VALID signal from being detected by the reservation stations 108. In this manner, any instruction located at any one of the RS queues of the reservation stations 108 that is also dependent upon the load instruction is not dispatched prematurely for execution. Thus, the execution pipelines in which the dependent instructions have been prematurely dispatched to need not be flushed and the corresponding instructions need not be replayed. Eventually, the load instruction is replayed non-speculatively in program order avoiding the potential for collision. If CLR is not asserted before LD VALID or coincidentallywith LD VALID, then a collision is not detected and the speculatively dispatched load instruction is allowed to execute to completion.

In one embodiment, the store virtual addresses STVA0 - STVA15 and corresponding qualify valid signals QV0 - QV15 and qualify condition signals QCOA/B - QC15A/B may be provided directly from the store pipe 119. Alternatively, when timing or routing issues may prevent a direct interface, intermediate memory devices, such as registers or latches or the like, may be provided between the store pipe 119 and the LoStQ 326. Alternatively, as shown by exemplary entry ENnn in FIG. 5, each of the entries ENT00 - ENT15 of the LoStQ 326 may incorporate memory devices 502 for storing the store instruction virtual addresses and the qualify signals. The store instruction virtual addresses and the qualify signals may still be generated within the store pipeline 119, but are copied over to the memory devices 502. The memory devices 502 may be registers or latches or the like.

It is understood that the LoStQ 326 may detect and indicate a collision that does not, in fact, exist. In this case, any benefit of speculatively dispatching the load instruction is lost and a slight performance drop may result by delaying the dependent instructions. Nonetheless, the statistical occurrence of false detections is relatively small so that the performance benefits of detecting actual collisions significantly outweighs the slight performance crop caused by false detections.

The foregoing description has been presented to enable one of ordinary skill in the art to make and use the present invention as provided within the context of a particular application and its requirements. Although the present invention has been described in considerable detail with reference to certain preferred versions thereof, other versions and variations are possible and contemplated. Various modifications to the preferred embodiments will be apparent to one skilled in the art, and the general principles defined herein may be applied to other embodiments. For example, the circuits described herein may be implemented in any suitable manner including logic devices or circuitry or the like.

Those skilled in the art should appreciate that they can readily use the disclosed conception and specific embodiments as a basis for designing or modifying other structures for carrying out the same purposes of the present invention without departing from the scope of the invention. Therefore, the present invention is not intended to be limited to the particular embodiments shown and described herein, but is to be accorded the widest scope consistent with the principles and novel features herein disclosed.

## Claims

1. A microprocessor (100), comprising:
a load pipeline (117) comprising a plurality of stages (302, 304, 306, 308, 310, 312, 314, 316) including at least one operand stage (304, 306, 308) and a plurality of execution stages (310, 312, 314, 316);
a scheduler that dispatches load instructions to said at least one operand stage for execution by said plurality of execution stages, wherein said load instructions include a speculatively dispatched load instruction; and
a load-store queue (326) that asserts a clear signal (CLR) to invalidate a speculatively dispatched load instruction when a match occurs between a load instruction virtual address (LDVA) and a store instruction virtual address (STVAO) of at least one previously dispatched store instruction in which corresponding store data has not yet been determined, wherein
said load-store queue (326) comprises:
an OR logic (410) that asserts said clear signal (CLR) when at least one of a plurality of preliminary clear signals (CL0~CL15) is asserted; and
a plurality of entries (ENT01~ENT15), each comprising:
a valid logic (406, 408) that asserts a store valid signal (VEO) when a corresponding store instruction virtual address (STVAO) corresponds to a store instruction that is dispatched early than said speculatively dispatched load instruction and whose corresponding store data has not yet been determined, wherein the valid logic comprises:
a first OR logic (408) receiving qualify condition signals (QCOA, QC0B), wherein one of the qualify condition signals (QCOA, QCOB) asserted true indicates validity of the corresponding store instruction virtual address (STVA0); and
a first AND logic (406) receiving the output of the first OR logic (408) and a qualify valid signal (QVO) indicating whether the corresponding store instruction virtual address (STVAO) is valid, wherein when the corresponding store instruction virtual address (STVAO) is valid, the first AND logic (406 asserts the store valid signal (VE0);
a compare logic (402) that compares said load instruction virtual address (LDVA) of said speculatively dispatched load instruction with said corresponding store instruction virtual address (STVAO) and provides a corresponding match signal (M0); and
a second AND logic (404) that asserts a corresponding one (CLO) of a plurality of preliminary clear signals (CL0~CL15) when said store valid signal (VEO) and said match signal (M0) are both true, wherein
each of said plurality of entries (ENT01∼ENT15) further comprises a memory (502) for storing a corresponding one of a plurality of store instruction virtual address (STVA0~STVA15).

2. The microprocessor (100) of claim 1, further comprising:
said plurality of stages configured to assert a load valid signal (LD VALID) when said speculatively dispatched load instruction has progressed to a selected one of said plurality of execution stages; and
a kill logic (328) that prevents said load valid signal (LD VALID) from being detected by said scheduler when said clear signal (CLR) is asserted.

3. The microprocessor (100) of claim 1 or 2, further comprising:
said plurality of stages configured to assert a load valid signal (LD VALID) when said speculatively dispatched load instruction has progressed to a selected one of said plurality of execution stages; and
a broadcast logic (324) that receives and broadcasts said load valid signal (LD VALID) to said scheduler when asserted unless said clear signal (CLR) is asserted to invalidate said speculatively dispatched load instruction, wherein said broadcast logic (324) includes a kill logic (328) that prevents said broadcast logic (324) from broadcasting said load valid signal (LD VALID) when said clear signal (CLR) is asserted.

4. The microprocessor (100) of any of the previous claims, wherein:
said plurality of stages are configured to assert a load valid signal (LD VALID) when said speculatively dispatched load instruction has progressed to a selected one of said plurality of execution stages; and wherein
said scheduler holds at least one dependent instruction that is dependent upon said speculatively dispatched load instruction, wherein said scheduler schedules dispatch of said at least one dependent instruction in response to said load valid signal (LD VALID) unless said clear signal (CLR) is asserted.

5. The load-store collision detection system of claim 1, comprising
a broadcast logic (324) that broadcasts said load valid signal (LD VALID) to the scheduler to enable dispatch of any instructions dependent upon the speculatively dispatched load instruction; and a kill logic (328) that invalidates said load valid signal when said clear signal is asserted before or coincident with said load valid signal, wherein said kill logic (328) is incorporated into said broadcast logic to prevent said load valid signal (LD VALID) from being broadcasted to the scheduler or incorporated within the scheduler to suppress said load valid signal in response to said clear signal (CLR).

6. The load-store collision detection system of claim 1, wherein:
said at least one store instruction virtual address comprises a plurality of store instruction virtual addresses (STVAO) of previously dispatched store instructions whose corresponding store data is not ready yet.

7. A method of reducing load-store collisions in a speculative out of order processing engine, comprising:
providing a store instruction address (STVAO) for each of at least one previously dispatched store instruction whose corresponding data is not ready yet;
speculatively dispatching a load instruction to a load pipeline (117);
determining a load instruction address (LDVA) for the speculatively dispatched load instruction before said speculatively load instruction is executed;
comparing the load instruction address (LDVA) with the store instruction address (STVAO) of each of said at least one previously dispatched store instruction;
providing qualify condition signals (QCOA, QCOB) to a OR logic (408) to determine the validity of the store instruction address (STVAO) of each of said at least one previously dispatched store instruction, wherein one of the qualify condition signals (QCOA, QCOB) asserted true indicates validity of the store instruction address (STVA0);
providing the output of the OR logic (408) and a qualify valid signal (QVO) to a AND logic (406) to generate a store valid signal (VEO), wherein the qualify valid signal (QVO) indicates whether the store instruction address (STVAO) is valid;
asserting the store valid signal (VEO) when the store instruction address (STVAO) corresponds to a store instruction that is dispatched early than said speculatively load instruction and whose corresponding store data is not ready yet;
asserting a clear signal (CLR) to invalidate said speculatively dispatched load instruction when clear (CLR) signal is asserted when the load instruction address (LDVA) matches the store instruction address (STVAO) of said at least one previously dispatched store instruction and the store valid signal (VEO) is asserted.

8. The method of any of claim 7, further comprising validating and qualifying the store instruction address (STVAO) of each of said at least one previously dispatched store instruction.

9. The method of any of claims 7 to 8, further wherein said asserting a clear signal (CLR) comprises asserting the clear signal (CLR) only when the store valid signal (VEO) is asserted.

10. The method of any of claims 7 to 9, further comprising:
said comparing comprising comparing the load instruction address (LDVA) with a plurality of store instruction address (STVA0∼STVA15) and asserting a corresponding one of a plurality of preliminary clear signals (CL0~CL15) for each match; wherein
said asserting a clear signal (CLR) comprises asserting the clear signal (CLR) when at least one of the preliminary clear signals (CL0~CL15) is asserted; and
determining validity and qualifying each of the plurality of store instruction addresses (STVA0-STVA15); and wherein
said asserting a corresponding one of a plurality of preliminary clear signals (CL0~CL15) comprises asserting a corresponding one (CLO) of the plurality of preliminary clear signals (CL~CL15) only when a corresponding one (STVAO) of the plurality of store instruction addresses (STVA0∼STVA15) is valid and qualified.

## Patentansprüche

1. Mikroprozessor (100) mit:
einer Ladepipeline (117), die eine Vielzahl von Stufen (302, 304, 306, 308, 310, 312, 314, 316) aufweist, die mindestens eine Operandenstufe (304, 306, 308) und eine Vielzahl von Ausführungsstufen (310, 312, 314, 316) enthalten;
einem Scheduler, der Ladebefehle an die mindestens eine Operandenstufe zum Ausführen durch die Vielzahl von Ausführungsstufen versendet, wobei die Ladebefehle einen spekulativ versendeten Ladebefehl enthalten; und
einer Ladespeicher-Warteschlange (326), die ein Löschsignal (CLR) auf einen aktiven Zustand setzt, um einen spekulativ versendeten Ladebefehl zu annullieren, wenn eine Übereinstimmung zwischen einer virtuellen Ladebefehlsadresse (LDVA) und einer virtuellen Speicherbefehlsadresse (STVAO) mindestens eines zuvor versendeten Speicherbefehls auftritt, in dem entsprechende Speicherdaten noch nicht bestimmt worden sind,
wobei die Ladespeicher-Warteschlange (326) aufweist:
eine ODER-Logik (410), die das Löschsignal (CLR) auf einen aktiven Zustand setzt, wenn mindestens eines einer Vielzahl von vorläufigen Löschsignalen (CLO ~ CL15) auf einen aktiven Zustand gesetzt ist; und
eine Vielzahl von Eingängen (ENT01 ~ ENT15), die jeweils aufweisen:
eine Validierungslogik (406, 408), die ein Speicherberechtigungssignal (VEO) auf einen aktiven Zustand setzt, wenn eine entsprechende virtuelle Speicherbefehlsadresse (STVAO) einem Speicherbefehl entspricht, der früher als der spekulativ versendete Ladebefehl versendet wird und dessen entsprechende Speicherdaten noch nicht bestimmt worden sind,
wobei die Validierungslogik aufweist:
eine erste ODER-Logik (408), die Qualifizierungsbedingungssignale (QCOA, QCOB) empfängt, wobei eines der Qualifizierungsbedingungssignale (QCOA, QC0B), das auf "wahr" gesetzt ist, die Gültigkeit der entsprechenden virtuellen Speicherbefehlsadresse (STVAO) anzeigt; und
eine erste UND-Logik (406), die das Ausgangssignal der ersten ODER-Logik (408) und ein Qualifizierungsgültigkeitssignal (QVO) empfängt, das anzeigt, ob die entsprechende virtuelle Speicherbefehlsadresse (STVAO) gültig ist, wobei, wenn die entsprechende virtuelle Speicherbefehlsadresse (STVAO) gültig ist, die erste UND-Logik (406) das Speicherberechtigungssignal (VEO) auf einen aktiven Zustand setzt;
eine Vergleichslogik (402), die die virtuelle Ladebefehlsadresse (LDVA) des spekulativ versendeten Ladebefehls mit der entsprechenden virtuellen Speicherbefehlsadresse (STVAO) vergleicht und ein entsprechendes Übereinstimmungssignal (M0) bereitstellt; und
eine zweite UND-Logik (404), die ein entsprechendes (CLO) einer Vielzahl von vorläufigen Löschsignalen (CLO ~ CL15) auf einen aktiven Zustand setzt, wenn das Speicherberechtigungssignal (VEO) und das Übereinstimmungssignal (M0) beide den Zustand "wahr" haben, wobei
jeder der Vielzahl von Eingängen (ENT01 ~ ENT15) ferner einen Speicher (502) zum Speichern einer entsprechenden einer Vielzahl von virtuellen Speicherbefehlsadressen (STVA0 ~ STVA15) aufweist.

2. Mikroprozessor (100) nach Anspruch 1, ferner mit:
der Vielzahl von Stufen, die dafür konfiguriert sind, ein Ladeberechtigungssignal (LD VALID) auf einen aktiven Zustand zu setzen, wenn der spekulativ versendete Ladebefehl zu einer ausgewählten der Vielzahl von Ausführungsstufen fortgeschritten ist; und
einer Abbruchlogik (328), die verhindert, dass das Ladeberechtigungssignal (LD VALID) durch den Scheduler erfasst wird, wenn das Löschsignal (CLR) auf einen aktiven Zustand gesetzt ist.

3. Mikroprozessor (100) nach Anspruch 1 oder 2, ferner mit:
der Vielzahl von Stufen, die dafür konfiguriert sind, ein Ladeberechtigungssignal (LD VALID) auf einen aktiven Zustand zu setzen, wenn der spekulativ versendete Ladebefehl zu einer ausgewählten der Vielzahl von Ausführungsstufen fortgeschritten ist; und
einer Rundsendelogik (324), die das Ladeberechtigungssignal (LD VALID) empfängt und an den Scheduler überträgt, wenn es auf einen aktiven Zustand gesetzt ist, es sei denn, das Löschsignal (CLR) ist auf einen aktiven Zustand gesetzt, um den spekulativ versendeten Ladebefehl zu annullieren, wobei die Rundsendelogik (324) eine Abbruchlogik (328) enthält, die verhindert, dass die Rundsendelogik (324) das Ladeberechtigungssignal (LD VALID) überträgt, wenn das Löschsignal (CLR) auf einen aktiven Zustand gesetzt ist.

4. Mikroprozessor (100) nach einem der vorhergehenden Ansprüche, wobei:
die Vielzahl von Stufen dafür konfiguriert sind, ein Ladeberechtigungssignal (LD VALID) auf einen aktiven Zustand zu setzen, wenn der spekulativ versendete Ladebefehl zu einer ausgewählten der Vielzahl von Ausführungsstufen fortgeschritten ist, und
wobei der Scheduler mindestens einen abhängigen Befehl hält, der von dem spekulativ versendeten Ladebefehl abhängig ist, wobei der Scheduler das Versenden des mindestens einen abhängigen Befehls in Antwort auf das Ladeberechtigungssignal (LD VALID) schedult, wenn das Löschsignal (CLR) nicht auf einen aktiven Zustand gesetzt ist.

5. Ladespeicherkollisionserfassungssystem nach Anspruch 1, mit:
einer Rundsendelogik (324), die das Ladeberechtigungssignal (LD VALID) an den Scheduler überträgt, um die Versendung jeglicher Anweisungen, die von der spekulativ versendeten Ladeanweisung abhängig sind, zu ermöglichen; und
einer Abbruchlogik (328), die das Ladeberechtigungssignal annulliert, wenn das Löschsignal vor oder gleichzeitig mit dem Ladeberechtigungssignal auf einen aktiven Zustand gesetzt wird, wobei die Abbruchlogik (328) in die Rundsendelogik integriert ist, um zu verhindern, dass das Ladeberechtigungssignal (LD VALID) an den Scheduler übertragen wird, oder in den Scheduler integriert ist, um das Ladeberechtigungssignal in Antwort auf das Löschsignal (CLR) zu unterdrücken.

6. Ladespeicherkollisionserfassungssystem nach Anspruch 1, wobei:
die mindestens eine virtuelle Speicherbefehlsadresse eine Vielzahl von virtuellen Speicherbefehlsadressen (STVAO) von zuvor versendeten Speicherbefehlen aufweist, deren entsprechende Speicherdaten noch nicht bereit sind.

7. Verfahren zum Vermindern von Ladespeicherkollisionen in einer spekulativen Out-of-Order-Verarbeitungsmaschine, mit den Schritten:
Bereitstellen einer Speicherbefehlsadresse (STVAO) für jeden unter mindestens einem zuvor versendeten Speicherbefehl, dessen entsprechende Daten noch nicht bereit sind;
spekulatives Versenden eines Ladebefehls an eine Ladepipeline (117);
Bestimmen einer Ladebefehlsadresse (LDVA) für den spekulativ versendeten Ladebefehl, bevor der spekulativ versendete Ladebefehl ausgeführt wird;
Vergleichen der Ladebefehlsadresse (LDVA) mit der Speicherbefehlsadresse (STVAO) jedes Speicherbefehls unter dem mindestens einen zuvor versendeten Speicherbefehl;
Bereitstellen von Qualifizierungsbedingungssignalen (QCOA, QCOB) für eine ODER-Logik (408) zum Bestimmen der Gültigkeit der Speicherbefehlsadresse (STVAO) jedes Speicherbefehls unter dem mindestens einen zuvor versendeten Speicherbefehl, wobei eines der Qualifizierungsbedingungssignale (QCOA, QC0B), das auf "wahr" gesetzt ist, die Gültigkeit der Speicherbefehlsadresse (STVAO) anzeigt;
Bereitstellen des Ausgangssignals der ODER-Logik (408) und eines Qualifizierungsgültigkeitssignals (QVO) für eine UND-Logik (406) zum Erzeugen eines Speicherberechtigungssignals (VEO), wobei das Qualifizierungsgültigkeitssignal (QVO) anzeigt, ob die Speicherbefehlsadresse (STVAO) gültig ist;
Setzen des Speicherberechtigungssignals (VEO) auf einen aktiven Zustand, wenn die Speicherbefehlsadresse (STVAO) einem Speicherbefehl entspricht, der früher als der spekulativ versendete Ladebefehl versendet wird und dessen entsprechende Speicherdaten noch nicht bereit sind; und
Setzen eines Löschsignals (CLR) auf einen aktiven Zustand, um den spekulativ versendeten Ladebefehl zu annullieren, wenn das Löschsignal (CLR) auf einen aktiven Zustand gesetzt ist, wenn die Ladebefehlsadresse (LDVA) mit der Speicherbefehlsadresse (STVAO) des mindestens einen zuvor versendeten Speicherbefehls übereinstimmt und das Speicherberechtigungssignal (VEO) auf einen aktiven Zustand gesetzt ist.

8. Verfahren nach Anspruch 7, ferner mit dem Validieren und Qualifizieren der Speicherbefehlsadresse (STVAO) jedes Speicherbefehls unter dem mindestens einen zuvor versendeten Speicherbefehl.

9. Verfahren nach Anspruch 7 oder 8, wobei das Setzen eines Löschsignals (CLR) auf einen aktiven Zustand ferner das Setzen des Löschsignals (CLR) auf den aktiven Zustand nur dann aufweist, wenn das Speicherberechtigungssignal (VEO) auf einen aktiven Zustand gesetzt ist.

10. Verfahren nach einem der Ansprüche 7 bis 9, wobei:
das Vergleichen das Vergleichen der Ladebefehlsadresse (LDVA) mit einer Vielzahl von Speicherbefehlsadressen (STVA0 ~ STVA15) und das Setzen eines entsprechenden unter einer Vielzahl von vorläufigen Löschsignalen (CLO ~ CL15) auf einen aktiven Zustand für jede Übereinstimmung aufweist,
wobei das Setzen eines Löschsignals (CLR) auf einen aktiven Zustand das Setzen des Löschsignals (CLR) auf einen aktiven Zustand aufweist, wenn mindestens eines der vorläufigen Löschsignale (CLO ~ CL15) auf einen aktiven Zustand gesetzt ist, und
mit dem Schritt zum Bestimmen der Gültigkeit und Qualifizieren jeder der Vielzahl von Speicherbefehlsadressen (STVA0 ~ STVA15), wobei
das Setzen eines entsprechenden einer Vielzahl von vorläufigen Löschsignalen (CLO ~ CL15) auf einen aktiven Zustand das Setzen eines entsprechenden (CLO) der Vielzahl von vorläufigen Löschsignalen (CLO ~ CL15) auf einen aktiven Zustand nur dann aufweist, wenn eine entsprechende (STVAO) der Vielzahl von Speicherbefehlsadressen (STVA0 ~ STVA15) gültig und qualifiziert ist.

## Revendications

1. Microprocesseur (100) comprenant :
un pipeline de chargement (117) comprenant une pluralité d'étages (302, 304, 306, 308, 310, 312, 314, 316) incluant au moins une étage d'opérande (304, 306, 308) et une pluralité d'étages d'exécution (310, 312, 314, 316) ;
un ordonnanceur qui distribue des instructions de chargement audit au moins un étage d'opérande pour l'exécution par ladite pluralité d'étages d'exécution, où lesdites instructions de chargement comportent une instruction de chargement distribuée spéculativement ; et
une file d'attente de stockage et de chargement (326) qui invoque un signal d'effacement (CLR) pour invalider une instruction de chargement distribuée de manière spéculative lorsqu'une correspondance a lieu entre une adresse virtuelle d'instruction de chargement (LVDA) et une adresse virtuelle d'instruction de stockage (STVAO) d'au moins une instruction de stockage distribuée précédemment, dans laquelle une donnée de stockage correspondante n'a pas encore été déterminée, où
ladite file d'attente de stockage et de chargement (326) comprend :
une logique OU (410) qui invoque ledit signal d'effacement (CLR) lorsqu'au moins un d'une pluralité de signaux d'effacement (CLO à CL15) préliminaires est invoqué ; et
une pluralité d'entrées (ENT01 à ENT15) comprenant chacune :
une logique valide (406, 408) qui invoque un signal valide de stockage (VEO) lorsqu'une adresse virtuelle d'instruction de stockage (STVAO) correspondante correspond à une instruction de stockage qui est distribuée plus tôt que l'instruction de chargement distribuée spéculativement et dont la donnée de stockage correspondante n'a pas encore été déterminée, la logique valide comprenant :
une première logique OU (408) recevant des signaux de condition de qualification (QCOA, QC0B), où un des signaux de condition de qualification (QCOA, QCOB) invoqué comme vrai indique la validité de l'adresse virtuelle d'instruction de stockage (STVAO) correspondante ; et
une première logique ET (406) recevant la sortie de la première logique OU (408) et un signal valide de qualification (QV0), indiquant si l'adresse virtuelle d'instruction de stockage (STVAO) correspondante est valide, où, lorsque l'adresse virtuelle d'instruction de stockage (STVAO) correspondante est valide, la première logique ET (406) invoque le signal valide de stockage (VEO) ;
une logique de comparaison (402) qui compare ladite adresse virtuelle d'instruction de chargement (LDVA) de ladite instruction de chargement distribuée spéculativement avec ladite adresse virtuelle d'instruction de stockage (STVAO) correspondante et fournit un signal de correspondance (M0) correspondant ; et
une deuxième logique ET (404) qui invoque un signal (CLO) correspondant d'une pluralité de signaux d'effacement (CLO à CL15) préliminaires lorsque ledit signal valide de stockage (VEO) et ledit signal de correspondance (M0) sont tous deux vrais, où
chacune de ladite pluralité d'entrées (ENT01 à ENT15) comprend en outre une mémoire (502) pour stocker une adresse correspondant d'une pluralité d'adresses virtuelles d'instruction de stockage (STVA0 à STVA15).

2. Microprocesseur (100) selon la revendication 1, comprenant en outre :
ladite pluralité d'étages conçue pour invoquer un signal valide de chargement (LD VALID) lorsque ladite instruction de chargement distribuée spéculativement a progressé vers un étage choisi de ladite pluralité d'étages d'exécution ; et
une logique tueuse (328) qui empêche ledit signal valide de chargement (LD VALID) d'être détecté par ledit ordonnanceur lorsque ledit signal d'effacement (CLR) est invoqué.

3. Microprocesseur (100) selon la revendication 1 ou la revendication 2, comprenant en outre :
ladite pluralité d'étages conçus pour invoquer un signal valide de chargement (LD VALID) lorsque ladite instruction de chargement distribuée spéculativement a progressé jusqu'à un étage choisi de ladite pluralité d'étages d'exécution ; et
une logique de diffusion (324) qui reçoit et diffuse ledit signal valide de chargement (LD VALID) audit ordonnanceur lorsqu'elle est invoquée sans que ledit signal d'effacement (CLR) n'ait été invoqué pour invalider ladite instruction de chargement distribuée spéculativement, où ladite logique de diffusion (324) comporte une logique tueuse (328) qui empêche ladite logique de diffusion (324) de diffuser ledit signal valide de chargement (LD VALID) lorsque ledit signal d'effacement (CLR) est invoqué.

4. Microprocesseur (100) selon l'une quelconque des revendications précédentes, dans lequel :
ladite pluralité d'étages est conçue pour invoquer un signal valide de chargement (LD VALID) lorsque ladite instruction de chargement distribuée spéculativement a progressé jusqu'à un étage choisi de ladite pluralité d'étages d'exécution ; et où
ledit ordonnanceur maintient au moins une instruction dépendante qui dépend de ladite instruction de chargement distribuée spéculativement, où ledit ordonnanceur planifie la distribution de ladite instruction dépendante en réponse audit signal valide de chargement (LD VALID) tant que ledit signal d'effacement (CLR) n'est pas invoqué.

5. Système de détection de collision de chargement et de stockage selon la revendication 1, comprenant
une logique de diffusion (324) qui diffuse ledit signal valide de chargement (LD VALID) audit ordonnanceur pour permettre la distribution de toutes les instructions dépendantes de l'instruction de chargement distribuée spéculativement ; et une logique tueuse (328) qui invalide ledit signal valide de chargement lorsque ledit signal d'effacement est invoqué précédemment ou coïncide avec ledit signal valide de charge, où ladite logique tueuse (328) est incorporée dans ladite logique de diffusion pour empêcher ledit signal valide de chargement (LD VALID) d'être diffusé vers l'ordonnanceur ou incorporé dans l'ordonnanceur pour supprimer ledit signal valide de chargement en réponse audit signal d'effacement (CLR).

6. Système de détection de collision de chargement et de stockage selon la revendication 1, dans lequel :
ladite adresse virtuelle d'instruction de stockage comprend une pluralité d'adresses virtuelles d'instruction de stockage (STVAO) d'instructions de stockage distribuées précédemment dont la donnée de stockage correspondante n'est pas encore prête.

7. Procédé de réduction de collisions de chargement et de stockage dans un moteur de traitement spéculatif en panne comprenant :
la fourniture d'une adresse d'instruction de stockage (STVAO) pour chacune des au moins une instruction de stockage distribuée précédemment dont la donnée correspondante n'est pas encore prête ;
la distribution spéculative d'une instruction de chargement au pipeline de chargement (117) ;
la détermination d'une adresse d'instruction de chargement (LDVA) pour l'instruction de chargement distribuée spéculativement avant que ladite instruction de chargement ne soit exécutée spéculativement ;
la comparaison de l'adresse d'instruction de chargement (LVDA) avec l'adresse d'instruction de chargement (STVAO) de chacune de l'au moins une instruction de stockage distribuée précédemment ;
la fourniture de signaux de condition de qualification (QCOA, QCOB) à une logique OU (408) pour déterminer la validité de l'adresse d'instruction de stockage (STVAO) de chacune desdites au moins une instruction de stockage précédemment distribuée, où un des signaux de condition de qualification (QCOA, QCOB) invoqué comme vrai indique la validité de l'adresse d'instruction de stockage (STVAO) ;
la fourniture de la logique OU (408) et d'un signal valide de qualification (QVO) à une logique ET (406) pour générer un signal valide de stockage (VEO), où le signal valide de qualification (QVO) indique si l'adresse d'instruction de stockage (STVAO) est valide ;
l'invocation du signal valide de stockage (VEO) lorsque l'adresse d'instruction de stockage (STVAO) correspond à une instruction de stockage qui est distribuée plus tôt que ladite instruction de chargement spéculativement et dont la donnée de stockage correspondante n'est pas encore prête ;
l'invocation d'un signal d'effacement (CLR) pour invalider ladite instruction de chargement distribuée spéculativement lorsque le signal d'effacement (CLR) est invoqué lorsque l'adresse d'instruction de chargement (LDVA) correspond à l'adresse d'instruction de stockage (STVAO) de ladite instruction de stockage distribuée précédemment et le signal valide de stockage (VEO) est invoqué.

8. Procédé selon l'une quelconque de la revendication 7, comprenant en outre la validation et la qualification de l'adresse d'instruction de stockage (STVAO) de chacune desdites au moins une instruction de stockage distribuée précédemment.

9. Procédé selon l'une quelconque des revendications 7 à 8, en outre, dans lequel l'invocation d'un signal d'effacement (CLR) comprend l'invocation du signal d'effacement (CLR) uniquement lorsque le signal valide de stockage (VEO) est invoqué.

10. Procédé selon l'une quelconque des revendications 7 à 9, comprenant en outre :
ladite comparaison comprenant la comparaison de l'adresse d'instruction de chargement (LDVA) avec une pluralité d'adresses d'instruction de stockage (STVA0 à STVA15) et l'invocation d'un signal correspondant d'une pluralité de signaux d'effacement (CLO à CL15) préliminaires pour chaque correspondance ; où
ladite invocation d'un signal d'effacement (CLR) comprend l'invocation du signal d'effacement (CLR) lorsque au moins un des signaux d'effacement (CLO à CL15) préliminaires est invoqué ; et
la détermination de la validité et de la qualification de chacune de la pluralité des adresses d'instruction de stockage (STVA0 à STVA15) ; et où
ladite invocation d'un signal correspondant de la pluralité de signaux d'effacement (CLO à CL15) préliminaires comprend l'invocation d'un signal (CLO) correspondant de la pluralité des signaux d'effacement (CLO à CL15) préliminaires uniquement lorsqu'une adresse (STVAO) correspondante de la pluralité des adresses d'instruction de chargement (STVA0 à STVA15) est valide et qualifiée.
